# EUROPEAN PATENT SPECIFICATION

(11) **EP 2 601 473 B1**
(45) Date of publication and mention of the grant of the patent: **11.02.2015**
(21) Application number: 11760847.1
(22) Date of filing: 02.08.2011
(51) Int. Cl.: F28D 21/00, F24H 1/52

(54) **HEAT EXCHANGER, IN PARTICULAR FOR WALL-MOUNTED CONDENSING BOILERS**
WÄRMETAUSCHER, IM BESONDEREN FÜR WANDMONTIERTE BRENNWERTKESSEL
ÉCHANGEUR DE CHALEUR, EN PARTICULIER POUR DES CHAUDIÈRES MURALES À CONDENSATION

(30) Priority: 02.08.2010 IT BO20100494
(43) Date of publication of application: 12.06.2013
(73) Proprietor: Gas Point S.R.L., 42041 Brescello (IT)
(72) Inventor: LOVASCIO, Nicola, I-42049 Sant'Ilario D'Enza (IT); RASTELLI, Raffaello, I-43058 Sorbolo (IT); ZATTI, Claudio, I-43058 Sorbolo (IT)
(74) Representative: Boggio, Luigi
(86) International application number: PCT/IB2011/053437
(87) International publication number: WO 2012/017388

(56) References cited:
- WO-A1-83/02493
- BE-A1- 881 808
- CH-A- 215 617
- DE-A1- 10 213 932
- GB-A- 2 149 484

## Description

### TECHNICAL FIELD

The present invention relates to a heat exchanger, in particular to a heat exchanger adapted to be used in wall-mounted condensing boilers.

In particular, the present invention is advantageously, but not exclusively applied to a wall-mounted boiler exhaust gas heat regenerator, to which explicit reference will be made in the description that follows without therefore loosing in generality.

### BACKGROUND ART

As known, in all boilers, a given amount of energy produced during the combustion process is dispersed through the flue pipe in a variable percentage from boiler to boiler.

The amount of energy dispersed through the flue pipe essentially depends on two factors:
(1) the heat exchange efficacy between exhaust gases produced by the burner and the fluid (generally water) to which heat is released in the heat exchanger; and
(2) the temperature value of the water which reenters into the heat exchanger from the closed circuit of the heating system.

Even if exchange efficacy was perfect, a quantity of energy would still be dispersed through the flue pipe because it is not physically possible to make combustion products exchange heat with a fluid at higher temperature.

In order to extract the most possible energy from combustion products, thermal systems have evolved towards solutions which include:
- use of oversized radiators or fan-coil units so as to be able to provide the energy required at lower average temperatures (60°C - 50°C) with respect to the past (80°C - 70°C); and/or
- use of "floor-fitted" systems suited to operate at even lower average temperatures (30°C - 40°C).

At the same time, boilers have evolved towards condensing solutions characterized by:
- large heat exchange surfaces of the heat exchanger;
- use of materials resistant to acid corrosion contained in condensation; and
- use of total pre-mix burners capable of working in low excess of air throughout their working range, and thus of making the exhaust gases condense with greater ease (indeed, it is known that the dew point of combustion products is higher the lower the excess of air contained in exhaust gases).

Recently, in order to extract also the last part of energy contained in combustion products, heat exchangers capable of exchanging heat with sanitary water, which is notoriously made available at temperatures comprised between 10°C (in winter) and 25°C (in summer), have been introduced.

One of the particularities of these heat regenerators consists in that they exchange the quantity of energy still available in combustion products exiting from the main heat exchanger of the boiler with the sanitary water accumulated in steady state.

However, the heat regenerators for wall-mounted boilers made until today are very costly, complex, with limited heat exchange surface and occupy large spaces if considerable amounts of water available for sanitary use are desired.

Document BE-A1-881 808 (BERNARDY) fully describes the preamble portion of present Claim 1.

### DISCLOSURE OF INVENTION

Thus, it is the main object of the present invention to make an exhaust gas/liquid heat exchanger which is free from the drawbacks described above and which, at the same time, is easy and cost-effective to make.

According to the present invention an exhaust gas/liquid heat exchanger is made, in particular a heat regenerator, as disclosed in Claim 1 or in any one of the Claims depending either directly or indirectly on Claim 1.

### BRIEF DESCRIPTION OF THE DRAWINGS

For a better understanding of the present invention, some preferred embodiments will now be described, only by way of non-limitative example and with reference to the accompanying drawings, in which:
- figure 1 shows a front view of a first embodiment of a boiler assembly provided with an exhaust gas/water heat exchanger according to the present invention;
- figure 2 shows a side view of the boiler assembly of the type shown in figure 1;
- figure 3 shows a longitudinal section A-A of the heat exchanger shown in figure 2;
- figure 4 shows a cross section B-B plotted on section A-A in figure 3;
- figure 5 shows a cross section C-C plotted on section A-A in figure 3;
- figure 6 shows a section D-D plotted on a fume joint adopted in the present invention;
- figure 7 shows a section E-E plotted on the joint in figure 6;
- figure 8 shows a section F-F plotted on the joint in figures 6, 7;
- figure 9 shows a longitudinal section G-G plotted on a heat exchanger used in a second embodiment of a boiler assembly;
- figure 10 shows a section H-H of the boiler assembly made in accordance with the second embodiment in figure 9; and
- figure 11 shows a cross section I-I plotted on section H-H in figure 10.

### BEST MODE FOR CARRYING OUT THE INVENTION

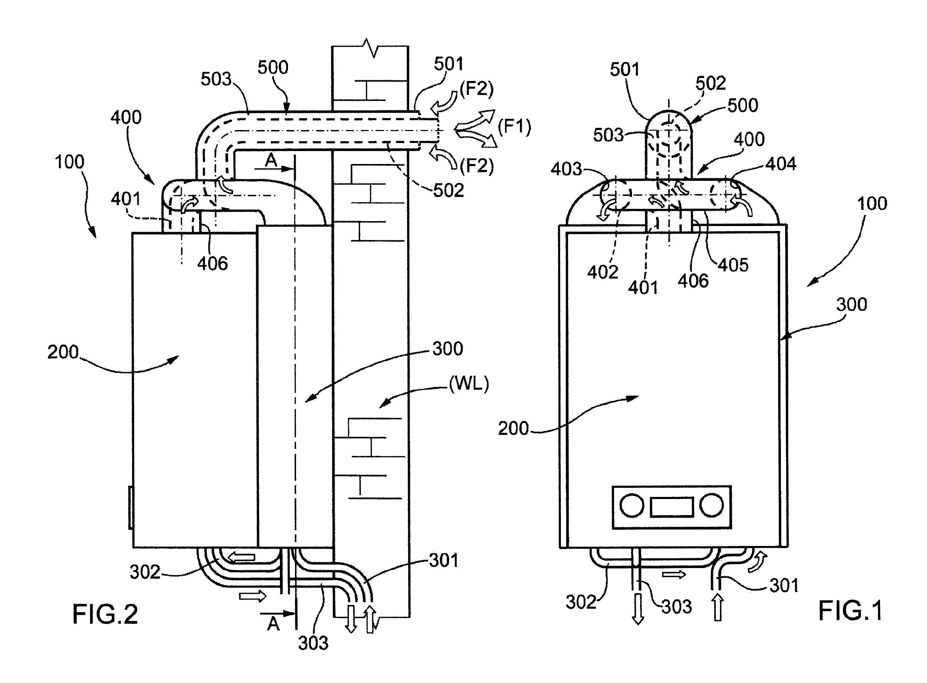

In figure 1, numeral 100 indicates as a whole a first embodiment of a boiler assembly in which an exhaust gas/liquid heat exchanger according to the present invention is mounted.

In greater detail, and with particular reference to figures 1 and 2, the boiler assembly 100 comprises a boiler 200 combined to a heat regenerator 300.

As shown in figures 1, 2 the regenerator 300 is arranged behind the boiler 200. The regenerator 300, in turn, is attached with known means (not shown) to a wall (WL). In this case, the containment and support frame of the regenerator 300 also acts as anchoring and supporting element of the boiler 200 to the wall (WL). In brief, the entire boiler assembly 100 is attached to the wall (WL).

As shown in greater detail below, this joint 400 has the function of conveying the exhaust combustion gases to the regenerator 300 and collecting them again after the heat exchanger returning them to the middle of the exhaust air/gas duct 500. In greater detail and with particular reference to figure 1, it can be said that such an air/exhaust gas duct 500 substantially comprises two concentric tubes 501, 502. In particular, the tube 502 scavenges the exhaust combustion gases, according to an arrow (F1), after the last heat exchange which occurs in the regenerator 300, while a gap 503, formed by the inner wall of the tube 501 and by the outer wall of the tube 502, is used to convey a flow of ambient air towards the burner (not shown) of the boiler 200 (arrow (F2)). Obviously, the ambient air is heated in the gap 503 by the exhaust gases exiting through the tube 502, and therefore pre-heated combustion air will reach the burner (not shown) of the boiler 200, fact which, as known, considerably improves the heat efficiency of the boiler.

The boiler 300 is advantageously, but not necessarily a condensing boiler which in all cases will not be described because of known type.

The cold sanitary water is fed to the regenerator 300 by means of a duct 301.

After having been pre-heated according to the method that will be described in greater detail below, such sanitary water after having exiting from the regenerator 300 is transferred to the boiler 200 by means of a duct 302. In the boiler 200 the water pre-heated in the regenerator 300 is brought to the final temperature desired by the user by means of the heat regulation of the boiler 200 itself. The sanitary water is then distributed to the users at the desired temperature by means of a distribution pipe 303 hydraulically connected to one or more taps (not shown).

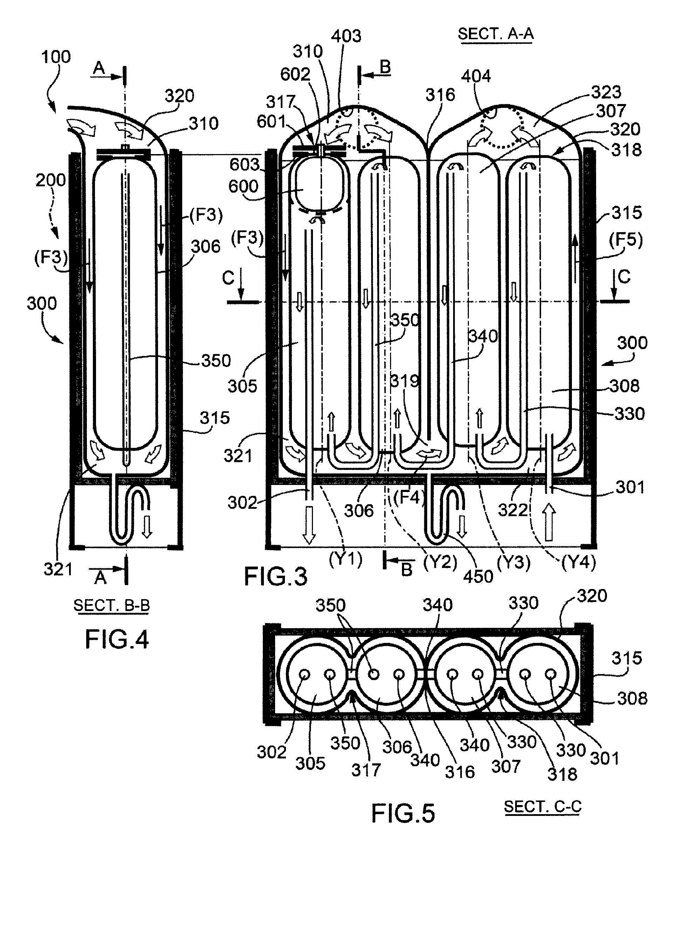

From the figures 3, 4, it is inferred that the regenerator 300 is to all effects and purposes a heat exchanger between the combustion products coming from the boiler 200 and a given amount of water accumulated inside a plurality of vessels 305, 306, 307, 308, or in transit through such vessels 305, 306, 307, 308. Each vessel 305, 306, 307, 308 has a respective vertical longitudinal symmetry axis (Y1), (Y2), (Y3), (Y4); such vertical longitudinal symmetry axes (Y1), (Y2), (Y3), (Y4) are parallel to one another.

The exhaust gases coming from the boiler 200 enter into a first upper exhaust gas introduction header 310 obtained in the upper part of a general container 320 in which the aforesaid vessels are also accommodated 305, 306, 307, 308. In turn, the general container 320 and the four vessels 305, 306, 307, 308 are within a chassis 315 (figure 3, 4, 5).

In the first embodiment illustrated in particular in figures 3, 4, 5, the two vessels 305, 306 are separated from the other two vessels 307, 308 by a vertical partition 316.

More in detail, the two vessels 305, 306 are mutually separated and contained in a first chamber 317, while the two vessels 307, 308 are separated from each other and are located in a second chamber 318, such chambers 317, 318 being separated by the aforesaid vertical partition 316.

As shown in figure 5, each gap existing between chamber 317, 318 and the vessels 305, 306 and 307, 308 has a shape substantially equal to that of a figure eight.

As shown in figure 3, the chambers 317, 318 are joined to each other by a passage 319 located in the bottom which, in actual fact, is simply the free space remaining in the lower part of the vertical partition 316.

In the embodiment shown in figures 3, 4, 5 in the first chamber 317 the heat exchange is counter-current with respect to the exhaust gases which descend and the water which substantially flows in the vessels 305, 306 from the bottom upwards, while the heat exchange in the second chamber 318 is equi-current because both the exhaust gases and the water flow upwards.

It has been experimentally found that this heat exchange sequence, i.e. firstly counter-current and then equi-current, as mentioned, is particularly advantageous and leads to have a final thermal energy recovery comprised between 1% and 2% more than in the reverse sequence.

The general container 320 consists of two parts essentially assembled to each other in the lower part by means of sealing and fastening systems according to the prior art. The general container 320 comprises a "central body" constituted by the intermediate part and by upper headers 310, 323 of the two chambers 317, 318, and a "cover" constituted by headers 321, 322 (see below). The headers 310 and 323 constitute the upper part of the chambers 317, 318.

Advantageously, but not necessarily, the walls of the two chambers 317, 318 can be made by means of the "blowing" technique of a thermoplastic material resistant to the temperature of the combustion products.

Alternatively, the walls of the two chambers 317, 318 and the partition 316 may be obtained by spinning of the two facing sheets facing each other and joined by a welding process in order to form both the walls of said chambers 317, 318 and the vertical partition 316.

The cover of the two chambers 317, 318 may be in turn made of thermoplastic material resistant to the temperature of the combustion products.

In this case, the operation is as follows:
the exhaust gases coming from the boiler 200 flow downwards according to an arrow (F3) into the first chamber 317 touching the first two vessels 305, 306 in a vertical descending direction. Such exhaust gases are collected in the first lower header 321, and then cross, according to an arrow (F4), the passage 319 to reach the second lower header 322 arranged at the second chamber 318.

Immediately afterwards, the exhaust gases start ascending into the second chamber 318, according to an arrow (F5), touching the second two vessels 307, 308 in a vertical ascending direction up to the second upper exhaust gas collection and outlet header 323 to finally return into the aforesaid joint 400 (figure 1) of the flue fittings.

Thus, along this path, the exhaust gases touch the walls of the vessels 305, 306, 307, 308 containing water at temperature lower than or equal to their temperature and exchange heat with such water condensing most of the residual humidity of the exhaust gases. The heat exchange thus occurs on levels of both sensible heat and latent heat contained in the exhaust gases exiting from the boiler.

The condensation contained in the exhaust gases is collected in the two lower headers 321, 322 and is evacuated through a siphon 450 either connected to or obtained as integral part of the general container 320.

As shown in greater detail in figure 3, the vessels 308, 307, 306, 305 are hydraulically connected in series to one another in pairs by means of two tubes 330, 340, 350.

In particular, the tube 330 is located straddling the vessels 308, 307, is substantially vertical and preferably but not necessarily displays a "hook shape" (also named " "J"-shape"). The tube 330 is arranged so as to take water from the upper part of the source vessel 318 and introduce it into the lower part of the destination vessel 317.

In brief, the tube 330 is adapted to take the hottest portion of the water which is in the vessel 318 at a given time and introduce it into the coldest portion of the water present in the vessel 307 in that moment.

Similar considerations apply to the other two tubes 340, 350 which hydraulically connect, respectively, vessel 307 to vessel 306, and vessel 306 to vessel 305. It is further worth noting that the curved portion of tube 340 crosses passage 319.

This type of hydraulic connection between the vessels 308, 307, 306, 305 ensures that there are no water pooling zones in the single vessels 308, 307, 306, 305, favoring in such a manner a better heat exchange with the exhaust gas flow. Furthermore, this type of hydraulic connection ensures that, during the first filling of the vessels 308, 307, 306, 305, first filling which occurs by means of the duct 301 (also see figures 1, 2), there is the total evacuation of the air initially contained in such vessels 308, 307, 306, 305. On the contrary, it has been experimentally found that with outer hydraulic connection systems between the various vessels 308, 307, 306, 305 air, which would lower the thermal efficacy of the entire heat regenerator 300, would remain trapped.

Advantageously, but not necessarily, an expansion pocket 600 containing a pressurized gas, e.g. pressurized nitrogen, which performs thermal expansion compensation functions of the water contained in the four vessels 305, 306, 307, 308, is inserted in one of the vessels, e.g. in vessel 305.

The expansion pocket 600 is anchored to a flange 601 (figure 3) which allows extraction through an opening 602 included on the vessel 305, in case of maintenance needs, and the filling by means of a pneumatic valve.

In use, the flange 601 rests on and is fixed to a perforated sheet 603 welded to the vessel 305.

The cold water coming from the hydraulic system enters into the vessel 308 through the duct 301 whenever the user takes sanitary water by means of any one of the hot water taps present in the home and hydraulically connected to the duct 303 (also see figures 1, 2).

Therefore, there may be two heat exchanger methods between the exhaust gases and the hot water:
- with static water accumulating inside the vessels 305, 306, 307, 308; or
- with water transiting through such vessels 305, 306, 307, 308.

The heat regenerator 300 is in series along the exhaust gas path; consequently, whenever the boiler 200 is working, both to heat the home and to produce sanitary hot water, the exhaust gases cross the heat regenerator 300 exchanging heat with the water contained therein, at least until all the water contained therein is at the same temperature as the incoming exhaust gases.

The distribution of the sanitary water contained in the heat regenerator 300 in a number of vessels higher than or equal to two allows to obtain a larger heat exchanger surface with respect to the corresponding volume contained in a single vessel having the same height as square root of the number of vessels in which it is re-distributed; in the illustrated embodiment, the volume is distributed in four vessels, and consequently the obtained heat exchange surface is double that which would be obtained if the water were contained in a single vessel of equal height and equal total volume.

This features explains the high heat exchange capacity of this embodiment with respect to others known.

This is all allowed in that the vessels 305, 306, 307, 308 are detached from one another and are all contained in a single general container 320 (in which, in this case however, two chambers 317, 317 are defined). The inner surface of the general container 320 (and also the inner surfaces of the chambers 317, 318) is next to the outer surfaces of the vessels 305, 306, 307, 308, so that such outer surfaces are touched by as much exhaust gas as possible in order to improve the heat exchange between such exhaust gas and the water contained in the vessels 305, 306, 307, 308.

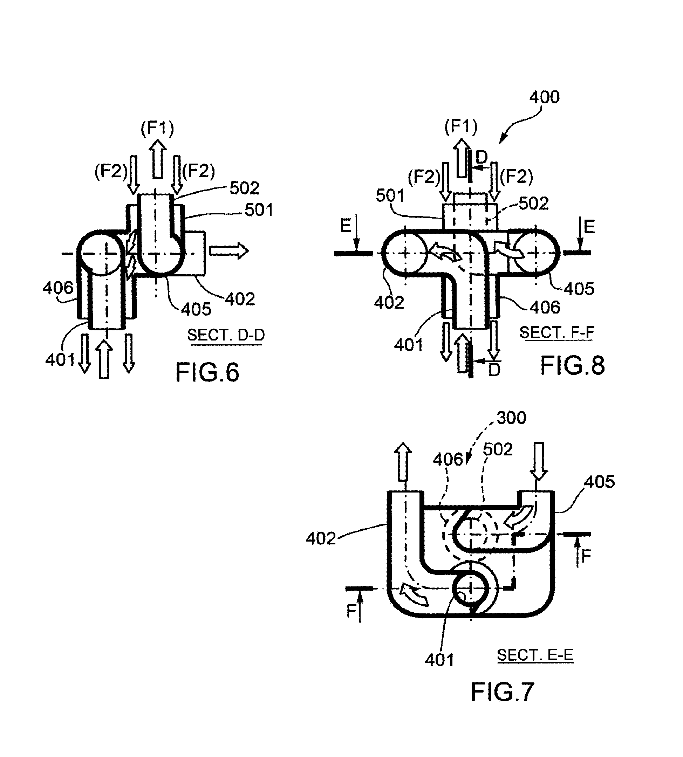

The joint 400 is shown in greater detail in figures 6, 7, 8.

The joint 400 comprises the aforesaid tubes 501, 502 and an outlet duct 401 of the fumes from the boiler 200 which leads into a fitting 402 adapted to convey such fumes towards an inlet mouth 403 (figures 1, 3) in the regenerator 300.

After having crossed the regenerator 300 with the methods described above, the fumes pass through an exhaust mouth 404 (figures 1, 3) and enter into a fitting 405 to be discharged through the mentioned tube 502 (figures 1, 7, 8).

The joint 400 comprises the mutually concentric air and exhaust gas passage sections.

The upper passage sections have retracted axis with respect to the lower passage sections.

Furthermore, the joint 400 has an exhaust gas outlet section towards the regenerator 300 and the exhaust gas inlet section of the regenerator 300 coplanar and perpendicular to the direction of the air and exhaust gas passage tubes.

Such an arrangement allows to considerably limit the vertical dimension of the joint 400 because the 90° curved ducts at the fume inlet of the boiler 401 and at the fume outlet to the exhaust duct 502 are on two parallel planes sufficiently distanced so as not to interfere with one another and to let the air flow from the upper inlet duct 501 to a lower outlet duct 406.

It also allows to be made by the union of only two parts made of thermoplastic material with simple mechanical equipment and joined on the horizontal plane passing through the horizontal axes of the ducts 402, 502.

Some typical examples of operation of the system are illustrated below:

### Example 1 - Boiler for heating with cold start in the morning (as typically occurs in winter during the early morning).

As mentioned, the exhaust gases exiting from the boiler after having exchanged heat with the exchanger of the boiler to the advantages of the water in the heating system enter into the regenerator provided with a residual amount of sensible, latent heat and exchange heat with the sanitary water contained therein until this reaches the exhaust gas inlet temperature.

### Example 2 - Boiler for the production of sanitary water only with cold start at any time of the day (typically as occurs in summer).

The exhaust gases exiting from the boiler after having exchanged heat to the advantage of sanitary water (by means of the heat exchanger first and then by means of the secondary exchange between the water in the closed boiler circuit and the sanitary water) enter into the regenerator provided with a residual amount of sensible, latent heat and heat exchange with sanitary water entering therein and raising the temperature by a few degrees and contributing to the overall instantaneous heat exchange of the boiler.

### Example 3 - Boiler for heating and for producing sanitary water at any time of the day (typically as occurs in winter during the entire day).

The two behaviors described in examples 1, 2 above are overlapped combining heat recovery, to the benefit of accumulation of sanitary water that occurs when no sanitary water is taken, with recovery, to the benefit of instantaneous production of sanitary water which occurs when water is taken.

Both effects translate into an increase of the sanitary water temperature at boiler inlet which occurs in the moment in which water is taken, with a consequent decrease of combustible gas consumption, the amount and temperature of the sanitary water produced being equal.

The benefit which can be obtained by the system must necessary take into account performance in winter conditions and in summer conditions.

In winter conditions, the benefit which can be obtained is correlated to the amount of energy needed by the domestic heating system (in turn related to the dimensions of the environments to be heated and by their degree of thermal insulation) and the working temperature of the system (which, in turn, is correlated to the type of system, e.g. to radiators/fan coil units or floor-fitted).

According to a further embodiment (not shown), the heat regenerator instead of being located between the boiler and the wall is arranged by the side of the boiler itself.

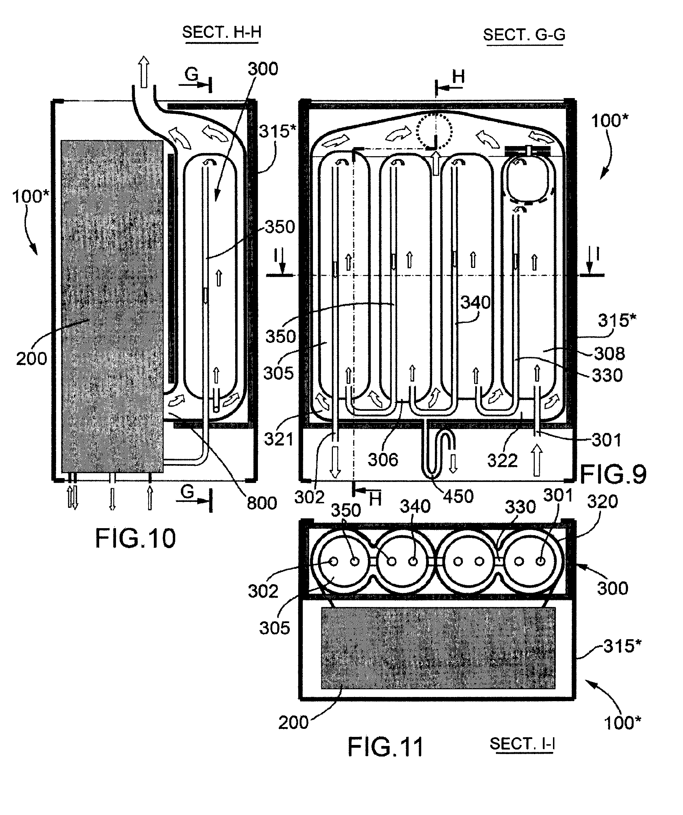

Figures 9, 10, 11 illustrate a second embodiment of a boiler assembly in which an exhaust gas/liquid heat exchanger according to the present invention is mounted.

In this case, the heat regenerator 300 is integrated in the boiler 200 so as to form a boiler assembly 100* having a single chassis 315*.

Components equal to those of the first embodiment in figures 1-5 have the same reference numerals.

It is worth noting that in this new embodiment the presence of the vertical partition 316 is no longer included because in this case the exhaust fumes are sent from the boiler 200 to the heat regenerator 300 by means of an exhaust channel 800 (figure 10) which is in the lower part of the boiler 200 itself.

Thus, the flow of exhaust gases entering into the general container 320 is always equi-current with respect to the water in the four vessels 305, 306, 307, 308. After the heat exchange, such gases are scavenged into the upper part of the general container 320 and after having crossing the node 400 exit from the tube 502.

One of the advantages of this particular embodiment consists in that because the introduction of all the exhaust gases into the regenerator 300 occurs in the lower part of such regenerator 300 there is no need to make any joint for diverting the fumes as occurs instead (see above) in the first embodiment described with reference to figures 1-8.

Although the aforesaid regenerator was firstly developed to be combined to wall-mounted condensing boilers and was designed as accessory in the installation of such type of boilers, it is not excluded that with adequate connection means the same regenerator can be combined to a base-mounted boiler (resting on the floor) and that the regenerator can be combined to non-condensing boilers by means of an adequate choice of materials adapted to be used at higher average temperatures.

Furthermore, the heat regenerator of the type described above may be used possibly by implementing the obvious changes of constructive nature to any stage of the heat exchange between the exhaust gases produced by a boiler and given amount of water. In other words, the teachings of the present invention easily apply to any exhaust gas/water heat exchanger.

The main advantages of the heat exchanger object of the present invention are represented in its extreme constructive simplicity, the high ratio between exchange surface and contained water volume and the ease of breathing air from the containers.

## Claims

1. An exhaust gas/liquid heat exchanger (300) comprising at least two vessels (305, 306, 307, 308) containing the liquid to be heated; said at least two vessels (305, 306, 307, 308) being hydraulically connected to one another, in pairs, by means of substantially vertical ducts (330, 340, 350), each of which takes liquid from the upper part of a first source vessel (308, 307, 306, 305) to introduce it into the lower part of a second destination vessel (308, 307, 306, 305);
**wherein** said at least two vessels (305, 306, 307, 308) are detached from one another and are within a chassis (315);
the heat exchanger (300) **characterized in that** said at least two vessels (305, 306, 307, 308) are contained in a casing (320, 317, 318) contained, in turn, within said chassis (315); said casing (320, 317, 318) having walls such as to oblige the exhaust gases to touch the walls of said at least two vessels (305, 306, 307, 308) so as to improve the heat exchange between such exhaust gases and the water containers in said at least two vessels (305, 306, 307, 308).

2. A heat exchanger (300), according to Claim 1, **characterized in that** the sanitary water is tapped from the last vessel (305).

3. A heat exchanger (300), according to any one of the preceding Claims, **characterized in that** said vessels (305, 306, 307, 308) are hydraulically connected to each other so that the at least the last vessel (305) crossed by the water is in counter-current with respect to the flow of exhaust gases, while the first vessel (308) crossed by the water is in equi-current with respect to the exhaust gas flow.

4. A heat exchanger (300), according to any one of the preceding Claims, **characterized in that** at least one vessel (305, 306) of said vessels (305, 306, 307, 308) is contained in a first chamber (317), while at least one vessel (307, 308) of said vessels (305, 306, 307, 308) is in a second chamber (318), such chambers (317, 318) being separated from each other by a vertical partition (316) and joined to each other by means of a passage (319).

5. A heat exchanger (300), according to Claim 4, **characterized in that** the walls of the two chambers (317, 318) are made by spinning of the two facing sheets then joined by a welding process in order to form both the walls of said chambers (317, 318) and the vertical partition (316).

6. A heat exchanger (300), according to Claim 4, **characterized in that** the walls of the two chambers (317, 318) and the partition (316) are obtained by "blowing" a thermoplastic material.

7. A heat exchanger (300), according to Claim 4, **characterized in that** the lower closing cover (321, 322) of the chambers (317, 318) is obtained by using a thermoplastic material having a suitable resistance to the temperature of the combustion products.

8. A heat exchanger (300) according to any one of the preceding Claims, **characterized in that** inside one of the vessels (305, 306, 307, 308) there is an expansion pocket (600) containing a pressurized gas which performs the functions of compensation of the thermal expansion of the water contained in the four vessels (305, 306, 307, 308) themselves.

9. A heat exchanger (300), according to any one of the preceding Claims, **characterized in that** it is a heat regenerator (300) which can be used in combination with a condensing boiler (200).

10. A boiler assembly (100), **characterized in that** it comprises at least one boiler (200) and at least one heat exchanger (300) according to Claim 9.

11. A boiler assembly (100) according to Claim 10, **characterized in that** said heat regenerator (300) is mounted between a boiler (200) and a wall (WL).

12. A boiler assembly (100) according to Claim 10, **characterized in that** said heat regenerator (300) is mounted beside said boiler (200).

13. A boiler assembly (100) according to any one of Claims 10-12, **characterized in that** said heat regenerator (300) is connected to the boiler air suction and exhaust gas scavenging ducts by means of a joint (400) having concentric air and exhaust gas passage sections, but with upper sections retracted with respect to the lower sections in sufficient measure to avoid the interference of fume ducts, and having the exhaust gas outlet section of the regenerator and the inlet section of the exhaust gases from the regenerator coplanar and perpendicular to the direction of the vertical air and exhaust gas air passage sections.

14. A boiler assembly (100), **characterized in that** it comprises a condensing boiler (200) combined to a heat regenerator (300) according to any one of Claims 1-9; said condensing boiler (200) and said regenerator (300) being integrated in a single chassis (315).

15. A boiler assembly (100) according to Claim 14, **characterized in that** said heat regenerator (300) is fed with exhaust gas coming from said condensing boiler (200) by means of a discharge channel (800) located in the lower part of said boiler (200).

## Patentansprüche

1. Abgas-Flüssigkeitswärmetauscher (300), der wenigstens zwei Behälter (305, 306, 307, 308) aufweist, welche die Flüssigkeit enthalten, die geheizt werden soll; wobei die wenigstens zwei Behälter (305, 306, 307, 308) mit Hilfe von im Wesentlichen vertikalen Kanälen (330, 340, 350), von denen jeder Flüssigkeit aus dem oberen Teil eines ersten der Behälter (308, 307, 306, 305) aufnimmt, hydraulisch miteinander verbunden sind, um diese in den unteren Teil eines zweiten der Behälter (308, 307, 306, 305) einzuleiten;
wobei die wenigstens zwei Behälter (305, 306, 307, 308) voneinander getrennt sind und innerhalb eines Gehäuses (315) sind;
wobei der Wärmetauscher (300) **dadurch gekennzeichnet ist, dass** die wenigstens zwei Behälter (305, 306, 307, 308) in einem Behältnis (320) enthalten sind, das wiederum in dem Gehäuse (315) enthalten ist; wobei das Behältnis (320) eine Innenfläche neben den Außenflächen der Behälter (305, 306, 307, 308) hat, um die Abgase zu zwingen, die Wände der wenigstens zwei Behälter (305, 306, 307, 308) zu berühren, um den Wärmeaustausch zwischen derartigen Abgasen und dem in den wenigstens zwei Behälter (305, 306, 307, 308) enthaltenen Wasser zu verbessern.

2. Wärmetauscher (300) nach Anspruch 1, **dadurch gekennzeichnet, dass** er für die Herstellung von Sanitärwasser verwendet wird, das von dem letzten Behälter (305) abgezapft wird.

3. Wärmetauscher (300) nach einem der vorhergehenden Ansprüche, **dadurch gekennzeichnet, dass** die Behälter (305, 306, 307, 308) hydraulisch miteinander verbunden sind, so dass wenigstens der letzte Behälter (305), der von dem Wasser durchquert wird, in Bezug auf die Strömung von Abgasen gegenläufig strömt, während der erste Behälter (308), das von dem Wasser durchquert wird, sich in Bezug auf die Abgasströmung im Gleichstrom befindet.

4. Wärmetauscher (300) nach einem der vorhergehenden Ansprüche, **dadurch gekennzeichnet, dass** eine erste und eine zweite Kammer (317, 318) in dem Behältnis (320) definiert sind und dass wenigstens ein Behälter (305, 306) der Behälter (305, 306, 307, 308) in der ersten Kammer (317) enthalten ist, während wenigstens ein Behälter (307, 308) der Behälter (305, 306, 307, 308) in der zweiten Kammer (318) ist, wobei die Kammern (317, 318) durch eine vertikale Trennwand (316) voneinander getrennt und mittels eines Durchgangs (319) miteinander verbunden sind.

5. Wärmetauscher (300) nach Anspruch 4, **dadurch gekennzeichnet, dass** die Wände der zwei Kammern (317, 318) hergestellt sind, indem zwei sich gegenüber liegende Schichten, die durch ein Schweißverfahren miteinander verbunden sind, schnell rotiert werden, um sowohl die Wände der Kammern (317, 318) als auch die vertikale Trennwand (316) auszubilden.

6. Wärmetauscher (300) nach Anspruch 4, **dadurch gekennzeichnet, dass** die Wände der zwei Kammern (317, 318) und die Trennwand (316) durch "Blasen" eines thermoplastischen Materials erhalten werden.

7. Wärmetauscher (300) nach Anspruch 4, **dadurch gekennzeichnet, dass** er eine untere Verschlussabdeckung (321, 322) der Kammern (317, 318) aufweist, die unter Verwendung eines thermoplastischen Materials mit einer geeigneten Widerstandsfähigkeit für die Temperatur der Verbrennungsprodukte erhalten wird.

8. Wärmetauscher (300) nach einem der vorhergehenden Ansprüche, **dadurch gekennzeichnet, dass** im Inneren eines der Behälter (305, 306, 307, 308) eine Expansionstasche (600) ist, die ein unter Druck stehendes Gas enthält, das die Funktionen der Kompensation der Wärmeausdehnung des in den vier Behältern (305, 306, 307, 308) selbst enthaltenen Wassers durchführt.

9. Wärmetauscher (300) nach einem der vorhergehenden Ansprüche, **dadurch gekennzeichnet, dass** er ein Wärmerückgewinner (300) ist, der in Kombination mit einem Brennwertkessel (200) verwendet werden kann.

10. Kesselanordnung (100), **dadurch gekennzeichnet, dass** sie wenigstens einen Kessel (200) und wenigstens einen Wärmerückgewinner (300) nach Anspruch 9 aufweist.

11. Kesselanordnung (100) nach Anspruch 10, **dadurch gekennzeichnet, dass** der Wärmerückgewinner (300) zwischen einem Kessel (200) und einer Wand (WL) montierbar ist.

12. Kesselanordnung (100) nach Anspruch 10, **dadurch gekennzeichnet, dass** der Wärmerückgewinner (300) neben dem Kessel (200) montiert ist.

13. Kesselanordnung (100) nach einem der Ansprüche 10 - 12, **dadurch gekennzeichnet, dass** der Wärmerückgewinner (300) mit Hilfe eines Verbindungsstücks (400) mit konzentrischen Luft- und Abgasdurchgangsabschnitten, dessen obere Abschnitte jedoch in Bezug auf die unteren Abschnitte in ausreichendem Maß zurückgezogen sind, um die Störung von Rauchkanälen zu vermeiden, mit den Kesselluftansaug- und Abgasreinigungskanälen verbunden ist, und der den Abgasauslassabschnitt des Rückgewinners und den Einlassabschnitt der Abgase von dem Rückgewinner komplanar und senkrecht zu der Richtung der vertikalen Luft- und Abgasluftdurchgangsabschnitte hat.

14. Kesselanordnung (100), **dadurch gekennzeichnet, dass** sie einen mit einem Wärmerückgewinner (300) nach Anspruch 9 kombinierten Brennwertkessel (200) aufweist; wobei der Brennwertkessel (200) und der Rückgewinner (300) in dem einzigen Gehäuse (315) integriert sind.

15. Kesselanordnung (100) nach Anspruch 14, **dadurch gekennzeichnet, dass** der Wärmerückgewinner (300) mittels eines Abgabekanals (800), der sich in dem unteren Teil des Kessels (200) befindet, mit Abgas gespeist wird, das von dem Brennwertkessel (200) kommt.

## Revendications

1. Echangeur de chaleur liquide/gaz d'échappement (300) comprenant au moins deux récipients (305, 306, 307, 308) contenant le liquide à chauffer ; lesdits au moins deux récipients (305, 306, 307, 308) étant reliés hydrauliquement entre eux au moyen de conduits (330, 340, 350) sensiblement verticaux, chaque d'eux prenant le liquide à la partie supérieure d'un premier desdits récipients (308, 307, 306, 305) pour l'introduire dans la partie inférieure d'un second desdits récipients (308, 307, 306, 305) ;
lesdits au moins deux récipients (305, 306, 307, 308) étant détachés l'un de l'autre et étant situés dans un châssis (315) ;
l'échangeur thermique (300) étant **caractérisé en ce qu'**au moins deux desdits récipients (305, 306, 307, 308) sont contenus dans un conteneur (320) contenu, à son tour, à l'intérieur dudit châssis (315) ; ledit conteneur (320) ayant une surface interne à proximité des surfaces externes desdits récipients (305, 306, 307, 308) de façon à obliger les gaz d'échappement à toucher les parois desdits au moins deux récipients (305, 306, 307, 308) afin d'améliorer l'échange de chaleur entre les gaz d'échappement et l'eau contenue dans lesdits au moins deux récipients (305, 306, 307, 308).

2. Echangeur de chaleur (300) selon la revendication 1, **caractérisé en ce qu'**il est utilisé pour la production d'eau sanitaire qui est prise sur le dernier récipient (305).

3. Echangeur de chaleur (300) selon l'une quelconque des revendications précédentes, **caractérisé en ce que** lesdits récipients (305, 306, 307, 308) sont reliés l'un à l'autre hydrauliquement de sorte que le dernier récipient (305) au moins traversé par l'eau est à contre-courant par rapport au flux de gaz d'échappement, tandis que le premier récipient (308) traversé par l'eau est en équi-courant par rapport au flux de gaz d'échappement.

4. Echangeur de chaleur (300) selon l'une quelconque des revendications précédentes, **caractérisé en ce qu'**un première et une seconde chambre (317, 318) sont définies dans ledit conteneur (320) et **en ce que** l'au moins un récipient (305, 306) desdits récipients (305, 306, 307, 308) est contenu dans ladite première chambre (317), tandis que l'au moins un récipient (307, 308) desdits récipients (305, 306, 307, 308) se trouve dans ladite deuxième chambre (318), lesdites chambres (317, 318) étant séparées l'une de l'autre par une cloison verticale (316) et reliées entre elles au moyen d'un passage (319).

5. Echangeur de chaleur (300) selon la revendication 4, **caractérisé en ce que** les parois des deux chambres (317, 318) sont constituées par repoussage de deux feuilles face à face qui sont jointes par un procédé de soudage de manière à former les parois desdites chambres (317, 318) et la cloison verticale (316).

6. Echangeur de chaleur (300) selon la revendication 4, **caractérisée en ce que** les parois des deux chambres (317, 318) et la cloison (316) sont obtenues par 'soufflage' d'une matière thermoplastique.

7. Echangeur de chaleur (300) selon la revendication 4, **caractérisé en ce qu'**il comprend un couvercle de fermeture inférieur (321, 322) qui est destiné aux chambres (317, 318) et qui est obtenu à l'aide d'une matière thermoplastique ayant une résistance appropriée à la température des produits de combustion.

8. Echangeur de chaleur (300) selon l'une quelconque des revendications précédentes, **caractérisé en ce qu'**à l'intérieur de l'un des récipients (305, 306, 307, 308) se trouve une poche d'expansion (600) contenant un gaz sous pression qui remplit les fonctions de compensation de la dilatation thermique de l'eau contenue dans les quatre récipients (305, 306, 307, 308) eux-mêmes.

9. Echangeur de chaleur (300) selon l'une quelconque des revendications précédentes, **caractérisé en ce que** c'est un régénérateur de chaleur (300) qui peut être utilisé en combinaison avec une chaudière à condensation (200).

10. Ensemble de chaudière (100), **caractérisé en ce qu'**il comprend au moins une chaudière (200) et au moins un régénérateur de chaleur (300) selon la revendication 9.

11. Ensemble de chaudière (100) selon la revendication 10, **caractérisé en ce que** ledit régénérateur de chaleur (300) est monté entre une chaudière (200) et une paroi (WL).

12. Ensemble de chaudière (100) selon la revendication 10, **caractérisé en ce que** ledit régénérateur de chaleur (300) est monté à côté de ladite chaudière (200).

13. Ensemble de chaudière (100) selon l'une quelconque des revendications 10 à 12, **caractérisé en ce que** ledit régénérateur de chaleur (300) est relié aux conduits de balayage des gaz d'échappement et d'aspiration d'air de la chaudière au moyen d'un joint (400) comportant des sections concentriques de passage d'air et de gaz d'échappement, les sections supérieures étant en retrait par rapport aux sections inférieures de manière suffisante pour éviter l'interférence des canaux de gaz de fumées, et la section de sortie des gaz d'échappement du régénérateur et la section d'entrée des gaz d'échappement dans le régénérateur étant coplanaires et perpendiculaires à la direction des sections verticales de passage d'air et de gaz d'échappement.

14. Ensemble de chaudière (100), **caractérisé en ce qu'**il comprend une chaudière à condensation (200) combinée à un récupérateur de chaleur (300) selon la revendication 9, ladite chaudière à condensation (200) et ledit régénérateur (300) étant intégrés dans ledit châssis unique (315).

15. Ensemble de chaudière (100) selon la revendication 14, **caractérisé en ce que** ledit régénérateur de chaleur (300) est alimenté en gaz d'échappement provenant de ladite chaudière à condensation (200) au moyen d'un canal de décharge (800) situé dans la partie inférieure de ladite chaudière (200).
